(19) Europäisches Patentamt
European Patent Office
Office européen des brevets

(11) Veröffentlichungsnummer : **0 111 761**
**B1**

(12) # EUROPÄISCHE PATENTSCHRIFT

(45) Veröffentlichungstag der Patentschrift : **01.10.86**

(51) Int. Cl.⁴ : **C 08 F 8/22**

(21) Anmeldenummer : **83111525.8**

(22) Anmeldetag : **18.11.83**

(54) **Chlorpolyethylen, Verfahren zu seiner Herstellung und seine Verwendung.**

(30) Priorität : **23.11.82 DE 3243249**

(43) Veröffentlichungstag der Anmeldung : **27.06.84 Patentblatt 84/26**

(45) Bekanntmachung des Hinweises auf die Patenterteilung : **01.10.86 Patentblatt 86/40**

(84) Benannte Vertragsstaaten : **BE DE FR GB IT NL**

(56) Entgegenhaltungen :
**EP-A- 0 058 311**
**DE-A- 2 055 751**
**US-A- 3 282 910**

(73) Patentinhaber : **HOECHST AKTIENGESELLSCHAFT**
**Postfach 80 03 20**
**D-6230 Frankfurt am Main 80 (DE)**

(72) Erfinder : **Busch, Wolfram**
**Akazienring 38**
**D-6203 Hochheim am Main (DE)**
Erfinder : **Brandrup, Johannes, Dr.**
**Am Allersberg 6**
**D-6200 Wiesbaden (DE)**
Erfinder : **Fleischer, Dietrich, Dr.**
**Seitersweg 19**
**D-6100 Darmstadt (DE)**

EP 0 111 761 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

. Chlorpolyethylen kann, je nach Struktur, als thermoplastischer oder chemisch vernetzter Kautschuk, als Elastifizierungsmittel für Hart-PVC, als polymerer Weichmacher für Weich-PVC, als Fließhilfe, als Polymerträger für Farbkonzentrate, als Lacküberzug udgl. verwendet werden. Wünschenswert für derartige Einsatzgebiete ist ein Chlorpolyethylen mit möglichst feinem Korn ohne grobteilige Agglomerate und eine möglichst geringe Oberflächenhärte. Durch einen hohen Feinkorn-Anteil wird nämlich die Mischbarkeit mit Polymeren und anorganischen bzw. organischen Zusätzen, wie z. B. Füllstoffen, Weichmachern, Stabilisatoren etc. erheblich verbessert und die Entmischung derartiger Systeme beim Transport und bei Verarbeitung verhindert. Für Produkte, die auf dem Lacksektor eingesetzt werden, verringert sich außerdem die Lösungszeit ganz erheblich. Nicht zuletzt wird auch das Blockverhalten der Chlorpolyethylenpartikel, das ist das eventuelle Zusammenbacken unter Transport- und Lagerungsbedingungen, merklich gemindert.

Das Problem hierbei ist jedoch, daß eine gute Durchchlorierung des Polyethylens, die zur Erzielung von gutem Kautschukverhalten erforderlich ist, gleichzeitig die Partikel-Agglomeration während der Chlorierung fördert und damit den Feinkorn-Anteil senkt.

Es hat nicht an Versuchen gefehlt, die während der Chlorierung auftretende Partikel-Agglomeration des un- und anchlorierten Polyethylen zu unterbinden bzw. zu reduzieren. So wird in der DE-AS 20 55 751 ein Verfahren beschrieben, bei dem durch eine spezielle Reaktionsführung und Verwendung von Schutzkolloiden hochwertiges, feinteiliges Chlorpolyethylen erhalten werden soll. Hiernach chloriert man in einer ersten Stufe das Polyethylen unterhalb seines oberen Schmelzpunktes, tempert anschließend oberhalb des unteren Schmelzpunktes des anchlorierten Polyethylens, um dann in einer dritten Stufe unterhalb der Temperstufe das restliche Chlor umzusetzen. Trotz Einsatz von Schutzkolloiden, z. B. Polyacrylsäure oder einem Copolymeren aus Maleinsäureanhydrid und Methylvinyläther, sowie Polyacrylamid, gelingt es bei diesem Verfahren jedoch nicht oder jedenfalls nur unvollständig, die Partikel-Agglomeration zu unterbinden. Es wird zudem ein Produkt mit einer Shore-Härte erhalten, die für bestimmte Einsatzgebiete, z. B. Verwendung als Kautschuk oder Folienmaterial, zu hoch ist.

Wendet man demgegenüber gemäß der DE-OS 22 60 525 statt einer wäßrigen neutralen Chlorierungsflotte konzentrierte Salzsäure an, so wird die Partikel-Agglomeration zwar merklich gesenkt ; es tritt jedoch immer noch Agglomeration mit weit über 3 mm Partikeldurchmesser auf, wenn das Ausgangspolyethylen einen mittleren Durchmesser von 0,4 mm aufweist. Auch der hierin beschriebene Zusatz von Kieselsäure und Silikonöl vermag ebenfalls nicht die Partikel-Agglomeration zu unterbinden. Vielmehr gelingt es nur, eine bestimmte Größe der agglomerierten Chlorpolyethylen-Partikel einzustellen.

Feinteilige anorganische bzw. organische Zusätze, z. B. Titanoxid und Ruß nach der DE-OS 14 95 518 oder Talkum gemäß der US-PS 3.454.544 sind nur teilweise wirksam, führen zu Produktverfärbungen und beeinträchtigen überdies durch ihre Einflüsse auf Viskosität und Abriebverhalten sehr nachteilig die Verarbeitung.

Der Einsatz von Schutzkolloiden zur Verhinderung der Partikel-Agglomeration während der Chlorierung wird z. B. in der JP-OS 72-07 455 beschrieben. Konkret werden hier für diesen Zweck Homo- oder Copolymere des Vinyl-N-pyrrolidons vorgeschlagen. Dieses Ziel wird zwar auf diese Weise erreicht, jedoch müssen dabei erhebliche Nachteile, wie in der Praxis kaum zu tolerierende Produktverfärbungen in Kauf genommen werden, da das so hergestellte Chlorpolyethylen nicht lichtstabil ist. Außerdem sind die so erhaltenen Produkte nur sehr unwirtschaftlich trockenbar, da der Feuchtegehalt nach der Chlorierung sehr hoch ist. Überdies ist die Oberflächenhärte dieses Chlorpolyethylens zu hoch, was den Einsatz als Weichgummi erheblich einschränkt.

Die Aufgabe vorliegender Erfindung bestand daher darin, ein Chlorpolyethylen bereitzustellen, das die Nachteile des Standes der Technik nicht aufweist und das insbesondere praktisch agglomerationsfrei ist, geringe Oberflächenhärte und ausgeprägtes Kautschukverhalten bei ausreichendem Antiblockverhalten aufweist und das ausreichend lichtstabil ist. Weiterhin war es die Aufgabe vorliegender Erfindung, ein geeignetes Verfahren zur Herstellung eines derartigen Chlorpolyethylens bereitzustellen.

Überraschenderweise läßt sich ein derartiges Polyethylen in der Weise erhalten, daß die Chlorierung des Polyethylens in Gegenwart einer Kombination aus Poly-N-Vinylpyrrolidon und hydrophober Kieselsäure erfolgt.

Die Erfindung betrifft daher ein praktisch agglomerationsfreies Chlorpolyethylen mit einem mittleren Molekulargewicht $\overline{M}_w$ von $3{,}3 \times 10^4$ bis $12 \times 10^6$, einem Chlorgehalt von 10 bis 50 Gew.-%, einer Restkristallinität von 0 bis 40 %, einer Oberflächenhärte von 35 (Shore A) bis 55° (Shore D), einer Rückprallelastizität von 5 bis 40 % und einer mittleren Teilchengröße von 150 bis 500 µm, dadurch gekennzeichnet, daß der mittlere Teilchendurchmesser des Chlorpolyethylens sich nicht um mehr als 15 % von dem des Ausgangspolyethylens unterscheidet.

Weiterhin hat die Erfindung ein Verfahren zur Herstellung von feinteiligem, praktisch agglomerationsfreiem Chlorpolyethylen zum Gegenstand, durch Chlorierung von Polyethylen in wäßriger Phase in Gegenwart eines Dispergiermittels, dadurch gekennzeichnet, daß als Dispergiermittel die Kombination aus Poly-N-Vinylpyrrolidon und hydrophober Kieselsäure eingesetzt wird.

Weitere Gegenstände der Erfindung sind aus den Patentansprüchen ersichtlich.

Das erfindungsgemäße Chlorpolyethylen besitzt vorzugsweise ein mittleres Molekulargewicht $\overline{M}_w$ von $6 \times 10^4$ bis $5 \times 10^5$, einen Chlorgehalt von vorzugsweise 25 bis 45 Gew.-%, eine Restkristallinität von vorzugsweise 0 bis 30 %, speziell von 0 bis 20 %, gemessen nach der Differentialthermoanalyse. Weiterhin beträgt die Oberflächenhärte nach Shore A (DIN 53 505) vorzugsweise 40 bis 80°, und die Rückprallelastizität (DIN 53 512) vorzugsweise 10 bis 35 %. Die mittlere Korngröße des Chlorpolyethylen-Pulvers liegt vorzugsweise bei 150 bis 300 µm ; sie unterscheidet sich nicht mehr als maximal 15 %, vorzugsweise nicht mehr als 3 bis 15 % und insbesondere nicht mehr als 4 bis 12 % von der des Ausgangspolyethylens.

Auch ohne den Gehalt der speziellen Kombination der Zusatzstoffe gemäß der DE-OS 2913855 weist das erfindungsgemäße Chlorpolyethylen neben der geringen Oberflächenhärte und der hohen Kautschukelastizität gutes Antiblock-Verhalten auf.

Das erfindungsgemäße Chlorpolyethylen zeichnet sich vor allem durch weitgehende Agglomerationsfreiheit des Chlorpolyethylens aus, so daß der mittlere Teilchendurchmesser von Chlorierungsprodukt und Ausgangsprodukt nur wenig voneinander abweichen und ersterer nicht mehr als maximal 15 %, vorzugsweise nicht mehr als 12 % höher liegt als der des Ausgangsproduktes. Der Anteil an Agglomeraten beträgt höchstens 10 %, vorzugsweise höchstens 5 % und insbesondere höchstens 3 %.

Diese weitgehende Agglomerationsfreiheit ist dabei praktisch unabhängig von der Art der Chlorierung wie z. B. hoher Temperaturführung zur Herstellung amorpher kautschukartiger Typen oder mittlerer Temperaturführung für teilkristalline Produkte.

Bemerkenswert sind auch die weiteren Produkteigenschaften, die durch die erfindungsgemäße, praktisch agglomerationsfreie Chlorierung von Polyethylen erzielt werden. Besonders signifikant sind diese Kriterien bei Chlorpolyethylenen ohne restliche Kristallinität und einem Chlor-Gehalt zwischen 30 und 45 %. Überraschenderweise werden dabei erfindungsgemäß sehr niedrige Oberflächenhärten erhalten, z. B. fällt die Oberflächenhärte nach Shore A von 65° — erhalten bei Vergleichsversuchen ohen Dispergiermittel oder mit nur einem der beiden beanspruchten Dispergiermittel — auf 51° ab.

Desgleichen steigt die Rückprallelastizität (DIN 53 512) als Maß für das Kautschukverhalten bei Verwendung des beanspruchten Dispergiermittelsystems von 18 auf 28 % an.

Der hohe Korn-Feinheitsgrad bietet erhebliche Vorteile für die Homogenität und Stabilität von Mischungen mit anderen Polymeren. Bekanntlich kann bereits durch den Materialtransport durch Stoß- und Rüttelbewegungen eine Entmischung auftreten, die unter Umständen bei der Verarbeitung noch verstärkt wird. Diese Phänomene führen zu nichtakzeptablen Eigenschaftsverschiebungen am Endprodukt und betreffen z. B. Formsteifigkeit und mechanische Kriterien. Paßt man jedoch die Korngröße des zu verwendenden Chlorpolyethylens derjenigen der zweiten Polymer-Komponente, z. B. Polyethylen, Polypropylen oder PVC an, was durch Wahl der Kornverteilung einer entsprechenden Polyethylen-Type möglich ist, so werden die geschilderten Entmischungensphänomene erheblich gemildert oder treten überhaupt nicht in Erscheinung.

Das erfindungsgemäße Chlorpolyethylen kann die üblichen Zusatzstoffe, wie Stabilisatoren, Antioxydantien, UV-Stabilisatoren, Pigmente, Farbstoffe, Füllstoffe, Verarbeitungshilfsmittel udgl. enthalten, wie sie beispielsweise in der DE-OS 2.456.278, der US-PS 3.641.216 oder in H. Kainer « Polyvinylchlorid und Vinylchlorid-Mischpolymerisate », Springer-Verlag, Berlin, Heidelberg, New-York (1965), S. 209 bis 258 und 275 bis 329 beschrieben sind.

Das nach dem erfindungsgemäßen Verfahren als eine Dispergiermittelkomponente eingesetzte Poly-N-Vinylpyrrolidon, das der Chlorierungsflotte in fester oder gelöster Form zugegeben werden kann, besitzt eine gute Wasser- und Säurelöslichkeit und weist in der Regel ein mittleres Molekulargewicht (Viskositätsmittel) von 2 500 bis 800 000, vorzugsweise 10 000 bis 100 000, entsprechend einem K-wert von 10 bis 120, vorzugsweise 20 bis 100 auf (K-Wert nach Fikentscher, Cellulosechemie 13 (1932) S. 58, hier gemessen in 1 %iger wäßriger Lösung bei 20 °C).

Unter dem Begriff Poly-N-Vinylpyrrolidon seien hier vor allem die Homopolymerisate von N1-Vinyl-2-pyrrolidon und N1-Vinyl-3-methyl-2-pyrrolidon verstanden. Daneben kommen erfindungsgemäß auch wasserlösliche bzw. säurelösliche Copolymerisate insbesondere vorstehend genannter Pyrrolidone mit damit copolymerisierbaren Monomeren in Frage, wie (Meth)- acrylsäure bzw. deren Salze oder Ester (vorzugsweise $C_1$-$C_6$-Alkyl in der Alkoholkomponente), Vinylester, wie Vinylacetat, Vinylether udgl., wobei der Anteil an Comonomer-Einheiten im Copolymer bis zu 20 Gew.-%, vorzugsweise bis zu 10 Gew.-% (bezogen auf Gesamtpolymer) beträgt. Erfindungsgemäß ist der Einsatz von Homo-N-1-Vinyl-2-pyrrolidon bevorzugt.

Normalerweise wird das Poly-N-Vinylpyrrolidon dem Chlorierungszusatz in Mengen von 0,01 bis 2 Gew.-%, vorzugsweise 0,02 bis 1 Gew.-%, und besonders bevorzugt 0,02-0,6 Gew.-%, bezogen auf das Polyethylen, zugesetzt. Bei Polyethylenen mit großer Molekulargewichtsbreite und großer spezifischer Oberfläche, die besonders zur Agglomeration neigen, und bei gleichzeitiger Verwendung von Chlorierungstemperaturen von oberhalb 130 °C empfehlen sich zumeist Mengen am Poly-N-Vinylpyrrolidon, die im oberen Bereich der vorstehenden genannten Mengenbereiche liegen.

Die andere erfindungsgemäße Dispergiermittelkomponente, die hydrophobe Kieselsäure, wird zumeist in Mengen von 0,05 bis 5 Gew.-%, vorzugsweise 0,1 bis 1,0 Gew.-%, bezogen auf das Polyethylen verwendet. Auch hier sind bei besonders zur Agglomeration neigenden Polyethylentypen oder bei entsprechend hohen Chlorierungstemperaturen Mengen im oberen Mengenbereich angeraten.

Das Mengenverhältnis von Poly-N-Vinylpyrrolidon zu hydrophober Kieselsäure liegt zweckmäßigerweise bei 1 : 20 bis 10 : 1, vorzugsweise bei 1 : 10 bis 5 : 1. Dieser Vorzugsbereich empfiehlt sich insbesondere für die erwähnten kritischen Fälle.

Unter hydrophober Kieselsäure wird hier nachträglich hydrophobierte Kieselsäure verstanden. Die Hydrophobierung der Kieselsäure, wobei hierfür sowohl pyrophor gewonnene Kieselsäure als auch gefällte Kieselsäure eingesetzt werden kann, erfolgt in der bekannten Weise. Beispielsweise kann dies so geschehen, daß die betreffende Kieselsäure, die im allgemeinen eine Primärteilchengröße von 5 bis 100 nm, vorzugsweise 10 bis 35 nm aufweisen sollte (entsprechend einer spezifischen Oberfläche nach BET von 50 bis 500 $m^2/g$), mit Silanverbindungen, z. B. Dimethyldichlorsilan ($(CH_3)_2Cl_2Si$) oder Trimethylchlorsilan ($(CH_3)_3ClSi$) imprägniert wird ; die Menge an Silanverbindung liegt dabei vorzugsweise bei 1 bis 2 Gew.-%. Die Silanverbindung kann — falls sie flüssig vorliegt — direkt oder auch in Lösung eingesetzt werden. Das Imprägnat wird anschließend bei höheren Temperaturen, beispielsweise bei ca. 400 °C nachbehandelt. Diese Verfahrensweise (sog. Silanisierung) ist z. B. in (H. Brümmer, D. Schutte, Chemiker-Zeitung/Chemische Apparatur *89* (1965) S. 437 beschrieben.

Die Hydrophobie einer solchermaßen durch Silanisierung erhaltenen Kieselsäure äußert sich in einer verminderten Feuchtigkeitsaufnahme, die etwa 1/5 bis 1/20 des nicht hydrophobierten Materials beträgt (vgl. hierzu auch die Firmenschrift der Fa. DEGUSSA, « Hydrophobiertes $^R$Aerosil »). Der Trockenverlust nach zweistündigem Erhitzen auf 105 °C DIN 55921) liegt im allgemeinen bei 2 bis 3 Gew.-%.

Die Hydrophobierung der Kieselsäure kann auch mittels Silisierung oder quasi *in-situ* bei der Chlorierung durch Zugabe der Kieselsäure und des Silikonöls zum Chlorierungsansatz. Unter den, dem technischen Sprachgebrauch zufolge als Silikonöl bezeichnete Organo-Siliciumverbindungen werden insbesondere Polysiloxane verstanden, die auf die wiederkehrende Einheit der allgemeinen Formel

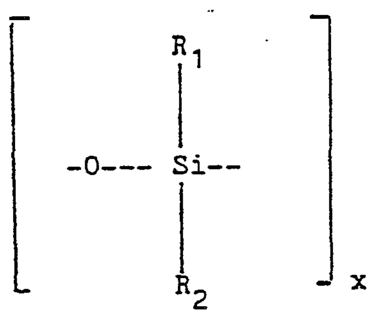

aufgebaut sind, worin $R_1$ und $_2$Alkylreste mit vorzugsweise 1 bis 12 C-Atomen, Arylreste mit vorzugsweise 6 oder 10 C-Atomen bzw. Aralkylreste mit 7 bis 12 C-Atomen und x eine Zahl von 10 bis 10 000, vorzugsweise 50 bis 500 bedeuten. Beispiele sind : Dimethyl-, Diäthyl-, Dipropyl-, Methyläther-, Dioctyl-, Dihexyl-, Methylpropyl-, Dibutyl- und Didodecylpolysiloxane.

Bevorzugt sind hierbei die Dimethylpolysiloxane. Das Molekulargewicht liegt zumeist bei 165 bis 100 000, vorzugsweise 10 000 bis 30 000 und die kinetische Viskosität bei 0,65 bis 100 000 $mm^2/s$, vorzugsweise 100 bis 1 000 $mm^2/s$. Bei der Hydrophobierung mit Silikonöl beträgt die Menge an gefällter oder pyrophorer Kieselsäure zu Silikonöl zumeist 100 : 1 bis 1 : 1, vorzugsweise 5 bis 10 : 1 (Gew.-Teile).

Die Teilchengröße der hydrophoben (hydrobierten) Kieselsäure liegt in der gleichen Größenordnung wie die Primärteilchengröße.

Das erfindungsgemäße Chlorierungsverfahren erfolgt im übrigen unter den an sich bekannten Bedingungen.

So dient als Reaktionsmedium Wasser, ggf. mit Elektrolytzusätzen wie $CaCl_2$, oder aber Salzsäure, wobei die Säurekonzentration zumeist zwischen 5 und 35 % vorzugsweise 5 bis 20 % liegt. Das Mengenverhältnis von Polyethylen zu Chlorierungsflotte, die noch weitere übliche Zusatzstoffe, wie Benetzungsmittel enthalten kann, beträgt in der Regel 1 : 5 bis 1 : 20, je nach Steuerbarkeit der Reaktion und den Möglichkeiten zur Abführung der Reaktionswärme.

Normalerweise wird die Chlorierung erfindungsgemäß ohne Verwendung von Initiatoren durchgeführt, jedoch kann in manchen Fällen die Anwesenheit derartiger Verbindungen wie beispielsweise Persulfate und Peroxide von Vorteil sein. Gegebenenfalls kann die Reaktion auch durch Licht oder energiereiche Strahlung initiiert werden.

Als Ausgangsmaterial für die Chlorierung eignen sich grundsätzlich alle Polyethylene, wobei deren mittleres Molekulargewicht $\overline{M}_W$ in der Regel im Bereich von $3 \times 10^4$ bis $6 \times 10^6$, vorzugsweise $4 \times 10^4$ bis $3 \times 10^5$ liegt. Ihre Molekulargewichtsverteilung ($M_w/M_n$) kann 2 bis 30, vorzugsweise 5 bis 20 betragen. Vorzugsweise werden erfindungsgemäß Polyethylene aus der Nieder- bzw. Mitteldrucksynthese nach dem sogenannten Ziegler- bzw. Phillipsverfahren und insbesondere nach der ersteren Verfahrensweise verwendet. Der Begriff Polyethylen umfaßt hier auch Copolymere aus Ethylen und bis zu 20 Gew.-% Comonomere wie Propen, Buten-1, 4-Methylpentan-1, Hexen-1, Octen-1.

Der Schmelzindex MFI 190/5 derartiger Produkte beträgt zweckmäßigerweise 0,01 bis 50 g/10 Min, die reduzierte spezifische Viskosität (0,1 %ige bzw. 0,03 %ige Lösung in Decahydronaphthalin bei 135 °C) 1,3 bis 25 dl/g, die Dichte 0,91 bis 0,97. Die maximale Schmelztemperatur liegt oberhalb von 100 °C und zumeist bei 115 bis 140 °C.

Die Teilchengröße des verwendeten Polyethylens ist beim erfindungsgemäßen Verfahren nicht kritisch. Da erfindungsgemäß ein möglichst feinteiliges Chlorpolyethylen angestrebt wird, sollte aber auch bereits das Ausgangsmaterial vorzugsweise sehr feinteilig sein. Es können daher bereits Polyethylentypen chloriert werden, die einen mittleren Korndurchmesser von nur 150 µm aufweisen. Jedoch sind auch Anwendungen bekannt, die größere mittlere Korndurchmesser, z. B. 400 µm und mehr erfordern. Der übliche Teilchengrößenbereich beträgt 10-500 µm.

Gegebenenfalls kann es von Vorteil sein, ein Niederdruckpolyethylen einzusetzen, das in bekannter Weise bei einer Temperatur von 100 °C bis zum Kristallit-Schmelzpunkt während einer Dauer von vorzugsweise 5 bis 300 Minuten getempert oder vorgesintert ist (vgl. DE-OS 1.720.800).

Unter Umständen kann es sich auch empfehlen, das Polyethylen in bekannter Weise vor Beginn der Chlorierungsreaktion anzumaischen, wobei der Zusatz kleiner Mengen hochwirksamer Benetzer sehr effektiv ist. Als Benetzer kommen die hierfür üblichen anionischen, kationischen oder nichtionischen Verbindungen in Frage, wobei letztere bevorzugt sind, wie beispielsweise Derivate von Fettsäuren, Fettamine, Fettsäureamiden sowie Homopolymeres Propylenoxid, Copolymere aus Propylenoxyd und Ethylenoxyd, Alkylarylenpolyglykoläther etc. Zum Anmaisch-Prozeß können bereits die erfindungsgemäßen Dispergiermittel der Polyethylen-Suspension zugefügt werden. Die Art der Zudosierung des wasser- und säurelöslichen Poly-N-Vinylpyrrolidons ist dabei beliebig, d. h. es kann entweder als Lösung oder als zu lösender Feststoff zugegeben werden. Die hydrophobe Kieselsäure wird pulverförmig eindosiert, desgleichen hydrophile Kieselsäure, die gemäß der oben diskutierten alternativen Verfahrensweise durch Zugabe von Silikonöl hydrophobiert wird. Es kann aber auch so verfahren werden, daß nur die Kieselsäure und das evtl. erforderliche Silikonöl vorgelegt werden und das Poly-N-Vinylpyrrolidon als wäßrige Lösung über eine Kesselschleuse oder Dosierpumpe über eine bestimmte Periode der Chlorierung zudosiert wird. In der Mehrzahl der Fälle wird jedoch die beanspruchte Kombination bereits der Polyethylen-Suspension vor Chlorierungsbeginn zugefügt. Zusätzlich können als Starter in bekannter Weise organische Peroxyde in kleinen Mengen der Reaktionsflotte beigegeben werden.

Die Chlorierungsreaktion kann zum Beispiel zweistufig geführt werden. Dabei wird in der ersten Chlorierungsphase eine stationäre Reaktionstemperatur unterhalb des max. Schmelzpunktes des zu verwendenden Polyethylens gewählt, wobei ca. die Hälfte des einzusetzenden Chlors bei einheitlicher Dosiermenge pro Zeit zugeleitet wird. Nach Ende der Reaktionsphase wird die Prozeßtemperatur bis zum maximalen Schmelzpunkt des Polyethylens angehoben und das restliche Chlor umgesetzt.

Neben diesem 2-Stufenverfahren kann aber auch nach anderen Methoden gemäß Stand der Technik verfahren werden ; u. a. kann Polyethylen auch 3- und mehrstufig oder überhaupt mit steigendem Temperaturprofil chloriert werden. In manchen Fällen empfiehlt sich auch die Temperung des anchlorierten Polyethylens oberhalb des oberen kritischen Schmelzpunktes des Polyethylens gemäß Stand der Technik mit und ohne Chlordosierung.

Üblicherweise liegen die Chlorierungstemperaturen in einem Bereich von 60-150 °C, wobei der maximale Druck ca. 6 bar beträgt. Die Chlormenge auf das Chlorpolyethylen bezogen bewegt sich im Bereich von 10-50 Gew.-% und ist abhängig von der angestrebten Qualität des Endproduktes, z. B. bei kautschukartigen Materialien ca. 20 bis 40 %, bei flammwidrigen Additiven 30 bis 50 % und bei thermoplastischen Kautschuken 10 bis 30 Gew.-%.

Die anschließende Aufarbeitung des chlorierten Polyethylens erfolgt in üblicher Weise. Nach Grobabtrennung der Flotte wird das sehr feinteilige Material zentrifugiert und anschließend getrocknet bis zu einem Feuchtegehalt unter 0,1 %. Durch Zugabe von Additiven läßt sich die für die Weiterverarbeitung erforderliche Thermostabilität sehr effektiv steigern. Weiterhin kann das feinstkörnige Material mit Antiblock-Mitteln, z. B. Stearinsäure, Stearaten, Kieselsäure, Feinst-PVC etc., präpariert werden, um optimale Lagerstabilität auch unter kritischer Temperatur- und Druckbeanspruchung zu erzielen. Das erfindungsgemäße Verfahren besitzt u. a. den Vorteil, daß sich hiermit Polyethylene mit breitem Qualitätspektrum chlorieren lassen, darunter auch solche, die leicht zu agglomerierenden Produkten führen. Wegen der starken agglomerationshemmenden Wirkung des erfindungsgemäßen Dispergiermittelsystems können dabei Verfahrensparameter wie Temperatur, Chlor-Dosierung, Chlor-Umsatz etc. überwiegend auf die Erzielung höchstmöglicher Produktqualität abgestellt werden.

Die Erfindung wird nachfolgend anhand von Ausführungsbeispielen erläutert.

## Beispiel 1

2,5 kg Polyethylen mit einem mittleren Molekulargewicht von $2 \cdot 10^5$, einer Molgewichtsverteilung von 5,1 und einer Kornfeinheit unter 300 µm von 90 % und einer mittleren Teilchengröße von 200 µm wurden mit 22,5 l 15 %iger Salzsäure in einem mit Rührer ausgerüsteten emaillierten 50 l-Druckgefäß in Gegenwart von 0,7 g Nonylphenylpolyglykoläther bei Raumtemperatur angemaischt und mit 25 g einer 10 %igen Lösung ( = 2,5 g Feststoff) von Poly-N-Vinylpyrrolidon, das ein Molekulargewicht von ca. 40 000 und einen K-Wert von 31 aufwies, sowie 25 g einer durch Umsetzung mit 2 Gew.-% (bezogen auf Kieselsäure) Dimethyldichlorsilan gewonnenen hydrophoben Kieselsäure mit einer Primär-Teilchengröße von ca. 30 nm und einer spezifischen Oberfläche nach BET von 120 $m^2/g$, versetzt. Nach 15 minütigem Rühren wurde der Kessel mehrfach mit Stickstoff gespült, anschließend auf 120 °C geheizt und mit der Einleitung von Chlor begonnen, wobei die Dosierung ca. 1,3 kg/h betrug. Der Kesselinnendruck lag bei

max. 4,2 bar. Nach 1-stündiger Reaktionszeit wurde die Kesseltemperatur auf 135 °C angehoben und die Chlorierung eine weitere Stunde durchgeführt, wobei der max. Druck 5 bar nicht überstieg. Der Gesamt-Chlor-Umsatz betrug 2,6 kg.

Nach Abkühlen und Entspannen wurde das gebildete Chlorpolyethylen von der Flotte mechanisch abgetrennt und zentrifugiert. Die Trocknung erfolgte in der Wirbelschicht bei ca. 60 °C Eingangstemperatur und wurde solange fortgesetzt, bis die Abgangsluft keine HCl-Gase mehr enthielt. Nach Zerkleinerung der bei der Trocknung gebildeten schwachen Aggregation, z. B. in einer Schnellmischer-Anlage, die gleichzeitig dazu diente, Antiblock-Zusätze z. B. Stearinsäure, Ca-stearat, feinste Kieselsäure etc. zuzumischen, wurde ein Feinst-Chlorpolyethylen mit einer Kornfraktion unter 300 µm von 85 % und einer mittleren Teilchengröße von 200 µm erhalten. Das hochelastische Material hatte eine Oberflächenhärte (Shore A) von 55° und eine Rückprallelastizität von 30 %. Ein Gemisch mit PVC (K-Wert 65) im Gewichtsverhältnis 10 : 90 blieb unter Rüttel/Schüttel-Bedingungen bei Transport und Verarbeitung stabil und führte zu Extrudaten mit homogener Qualität, z. B. einer Kerbschlagzähigkeit bei 20 °C von 30 N/mm$^2$ und einer Kugeldruckhärte von 95 N/mm$^2$ (30 sec.).

## Beispiel 2

Es wurde gemäß Beispiel 1 verfahren, jedoch wurde ein Polyethylen mit einem mittleren Molekulargewicht von 1,2 · 10$^5$, einer Molekulargewichtsverteilung von 6 und einer Kornfeinheit unter 300 µm von 80 % und einer mittleren Teilchengröße von 160 µm verwendet. Die erfindungsgemäßen Zusätze betrugen 125 g einer 10 %igen Lösung von Poly-N-Vinylpyrrolidon (Molekulargewicht 7 · 10$^5$, K-Wert 95) in Wasser, 2,5 g hydrophobe Kieselsäure (Behandlung mit Trimethylmonochlorsilan, spez. Oberfläche 130 m$^2$/g). Die erste Chlorierungsstufe wurde bei 115 °C, die folgende bei 130 °C durchgeführt. Die $Cl_2$-Dosierung betrug 1,2 kg/h, der Gesamt-Chlor-Umsatz 3 kg.

Das erhaltene Chlorpolyethylen besaß einen Chlorgehalt von 37 %, eine Oberflächenhärte von 49° (Shore A) und eine Rückprallelastizität von 22 %. Der Feinkornanteil unter 300 µm lag bei 76 %, die mittlere Teilchengröße bei 160 µm.

## Beispiel 3

Es wurde gemäß Beispiel 1 verfahren, jedoch wurde ein Polyethylen mit einem mittleren Molekulargewicht von 1,8 × 0$^5$, einer Molekulargewichtsverteilung von 12, einer Kornfeinheit unter 300 µm von 70 % und einer mittleren Teilchengröße von 200 µm verwendet.

Die erfindungsgemäßen Zusätze betrugen 150 g einer 10 %igen Lösung von Poly-N-Vinylpyrrolidon (Molekulargewicht ca. 40 000, K-Wert = 31) in Wasser, 7,5 g einer durch Zusatz von 0,75 g Silikonöl (Dimethyl-polysiloxan, mittleres Molekulargewicht ca. 30 000) hydrophobierter Kieselsäure mit einer Primar-Teilchengröße von 12 nm und einer spezifischen Oberfläche von 210 m$^2$/g. Die erste Chlorierungsphase erfolgte bei 125 °C, die zweite Stufe bei 138 °C. Die Chlordosierung betrug ca. 1,3 kg/h, der Gesamt-Chlorumsatz 3,5 kg.

Das resultierende Chlorpolyethylen hatte einen Chlorgehalt von 41 %, eine Oberflächenhärte (Shore A) von 45° und eine Rückprallelastizität von 31 %. Die Kornfeinheit unter 300 µm lag bei 64 %, die mittlere Teilchengröße bei 200 µm.

## Beispiel 4

2,5 kg Polyethylen mit einem mittleren Molekulargewicht von 6 · 10$^4$, einer Molekulargewichtsverteilung von 6,5, einer Kornfeinheit unter 300 µm von 82 % und einer mittleren Teilchengröße von 200 µm, wurden mit 30 l Wasser in einem mit Rührer ausgerüstetem emailierten 50 l-Druckgefäß in Gegenwart von 0,7 g Nonylphenylpolyglykoläther bei Raumtemperatur angemaischt und mit 0,4 g Dibenzoylperoxid versetzt. Anschließend fügte man der Aufschlämmung 300 g einer 10 %igen Poly-N-Vinylpyrrolidon-Lösung in Wasser zu, wobei das gelöste Polymere ein mittleres Molekulargewicht von ca. 40 000 und einen K-Wert von 31 hatte. Weiterhin wurden 180 g hydrophober Kieselsäure, präpariert durch Oberflächenbehandlung mit 2 g Dimethyldichlorsilan, mit einer Primär-Teilchengröße von ca. 2,0 nm und einer spezifischen Oberfläche von 150 m$^2$/g, zugefügt. Nach 15 minütigem Rühren wurde der Kessel mehrfach mit Stickstoff gespült, anschließend auf 110 °C geheizt und mit der Einleitung von Chlor, bei einer Dosierung von 1,2 kg/h, begonnen. Der Kesselinnendruck betrug maximal 5,4 bar. Nach einstündiger Reaktion wurde die Temperatur auf 128° erhöht und mit der Chlorierung fortgefahren. Der Gesamt-Chlorumsatz betrug 3 kg.

Das Produkt wurde in Beispiel 1 beschrieben aufgearbeitet und besaß folgende Kriterien :

| | |
|---|---|
| Chlorgehalt | 37,5 % |
| Oberflächenhärte (Shore A) | 47° |
| Rückprallelastizität | 15 % |
| Kornfeinheit (unter 300 µm) | 80 % |
| Mittlere Teilchengröße | 200 µm |

Vergleichsbeispiel 1

Es wurde wie in Beispiel 3 verfahren, jedoch wurde zum Vergleich weder Poly-N-Vinylpyrrolidon noch hydrophobe bzw. hydrophobierte Kieselsäure zugesetzt.

Der Ansatz agglomerierte bereits während der Chlorierung außerordentlich stark und enthielt nach der Aufarbeitung keine Feinkornanteile unter 300 µm ; die Teilchengröße lag bei 1 mm und darüber. Die Oberflächenhärte (nach Shore A) betrug 65°, die Rückprallelastizität 18 %.

Das Produkt war für eine Abmischung mit z. B. feinteiligem PVC ungeeignet, weil sich das Gemisch unter Rüttel-/Schüttelbewegung bei Transport und Verarbeitung teilweise entmischte, was zu inhomogener Extrudat-Qualität führte.

Vergleichsbeispiel 2

Es wurde wie in Vergleichsbeispiel 1 verfahren, jedoch enthielt der Ansatz 150 g einer 10 %igen Poly-N-Vinyl-pyrrolidon-Lösung in Wasser (mittleres Molekulargewicht ca. 40 000, K-Wert = 31). Es wurde kein Feinkorn erhalten, die mittlere Teilchengröße lag oberhalb von 0,5 mm. Die Oberflächenhärte betrug 67° (Shore A), die Rückprallelastizität war auf 14 % abgefallen. Wegen der Grobkörnigkeit war das Material für Mischungen mit feinstteiligem Polyethylen, Polypropylen oder PVC ungeeignet, da solche Kombinationen durch mechanische Bewegungen bei Transport und Verarbeitung zu Entmischung führte, die z. B. bei Extrudaten stetig sich veränderte Eigenschaften ergab (z. B. Kerbschlagzähigkeit, Kugeldruckhärte).

Vergleichsbeispiel 3

Es wurde wie in Vergleichsbeispiel 1 verfahren, jedoch enthielt der Ansatz hydrophobierte Kieselsäure gemäß Beispiel 3, und zwar in einem Fall 7,5 g und im anderen Fall 22,5 g.

Auch hier wurde in beiden Fällen kein Feinkorn erhalten ; die Teilchengrößen lagen oberhalb von 1 mm, die Oberflächenhärte (Shore A) betrug 63°, die Rückprallelastizität lag bei 8 %.

**Patentansprüche**

1. Chlorpolyethylen mit einem mittleren Molekulargewicht $\overline{M}_w$ von $3{,}3 \times 10^4$ bis $12 \times 10^6$, einem Chlorgehalt von 10 bis 50 Gew.-%, einer Restkristallinität von 0 bis 40 %, einer Oberflächenhärte von 35 (Shore A) bis 55° (Shore D), einer Rückprallelastizität von 5 bis 40 % und einer mittleren Teilchengröße von 150 bis 500 µm, dadurch gekennzeichnet, daß der mittlere Teilchendurchmesser des Chlorpolyethylens sich nicht um mehr als 15 % von dem des Ausgangspolyethylens unterscheidet.

2. Chlorpolyethylen nach Anspruch 1, dadurch gekennzeichnet, daß der mittlere Teilchendurchmesser des Chlorpolyethylens von dem des Ausgangspolyethylens sich um nicht mehr als 4-12 % unterscheidet.

3. Chlorpolyethylen nach Anspruch 1 und/oder 2, dadurch gekennzeichnet, daß der mittlere Teilchendurchmesser 150 bis 300 µm beträgt.

4. Verfahren zur Herstellung von Chlorpolyethylen nach mindestens einem der Ansprüche 1 bis 3 durch Chlorierung von Polyethylen in wäßriger Phase in Gegenwart eines Dispergiermittels, dadurch gekennzeichnet, daß als Dispergiermittel die Kombination aus Poly-N-Vinylpyrrolidon und hydrophober Kieselsäure eingesetzt wird.

5. Verfahren nach Anspruch 4, dadurch gekennzeichnet, daß das Poly-N-Vinylpyrrolidon ein mittleres Molekulargewicht (Viskositätsmittel) von 10 000 bis 100 000 aufweist.

6. Verfahren nach Anspruch 4 und/oder 5, dadurch gekennzeichnet, daß das Poly-N-Vinylpyrrolidon in Mengen von 0,02 bis 1 Gew.-%, bezogen auf Polyethylen, der Chlorierungsflotte zugesetzt wird.

7. Verfahren nach mindestens einem der Ansprüche 4 bis 6, dadurch gekennzeichnet, daß die hydrophobe Kieselsäure in Mengen von 0,1 bis 1 Gew.-%, bezogen auf Polyethylen, eingesetzt wird.

8. Verfahren nach mindestens einem der Ansprüche 4 bis 7, dadurch gekennzeichnet, daß das Gewichtsverhältnis von Poly-N-Vinylpyrrolidon zu hydrophober Kieselsäure 1 : 10 bis 5 : 1 beträgt.

9. Verwendung des Chlorpolyethylens gemäß mindestens einem der Ansprüche 1 bis 3 zur Herstellung von Stoffgemischen, welche neben Polymeren sowie gegebenenfalls Stabilisatoren und anderen bekannten Zusatzstoffen dieses Chlorpolyethylen enthalten.

10. Formkörper, hergestellt aus dem Chlorpolyethylen gemäß mindestens einem der Ansprüche 1 bis 3.

**Claims**

1. Chloropolyethylene having an average molecular weight $\overline{M}_w$ of from $3.3 \times 10^4$ to $12 \times 10^6$, a chlorine content of from 10 to 50 weight %, a residual crystallinity of from 0 to 40 %, a surface hardness of from 35° (Shore A) to 55° (Shore D), an impact resilience of from 5 to 40 %, and an average particle size of

from 150 to 500 µm, wherein the average particle diameter of the chloropolyethylene differs from that of the starting polyethylene by 15 % at most.

2. Chloropolyethylene as claimed in claim 1, wherein the average particle diameter of the chloropolyethylene differs from that of the starting polyethylene by a maximum 4 to 12 %.

3. Chloropolyethylene as claimed in claim 1 and/or 2, wherein the average particle size is from 150 to 300 µm.

4. A process for the manufacture of chloropolyethylene as claimed in at least one of the claims 1 to 3 by chlorination of polyethylene in aqueous phase in the presence of a dispersing agent, which comprises using as dispersing agent a combination of poly-N-vinylpyrrolidone and hydrophobic silicic acid.

5. The process as claimed in claim 4, wherein the poly-N-vinylpyrrolidone has an average molecular weight (viscosity average) of from 10,000 to 100,000.

6. The process as claimed in claim 4 and/or 5, wherein the poly-N-vinylpyrrolidone is added to the chlorination liquor in an amount of from 0.02 to 1 weight %, relative to the polyethylene.

7. The process as claimed in at least one of the claims 4 to 6, wherein the hydrophobic silicic acid is used in an amount of from 0.1 to 1 weight %, relative to the polyethylene.

8. The process as claimed in at least one of the claims 4 to 7, wherein the weight ratio of poly-N-vinylpyrrolidone to hydrophobic silicic acid is from 1 : 10 to 5 : 1.

9. Use of the chloropolyethylene as claimed in at least one of the claims 1 to 3, for the preparation of substance mixtures which in addition to polymers and optinally stabilizers and other known additives contain this chloropolyethylene.

10. Shaped articles manufactured from the chloropolyethylene as claimed in at least one of the claims 1 to 3.

**Revendications**

1. Chloropolyéthylène présentant un poids moléculaire moyen $\overline{M}w$ de $3,3 \times 10^4$ à $12 \times 10^6$, une teneur en chlore de 10 à 50 % en poids, une cristallinité résiduelle de 0 à 40 %, une dureté de surface de 35° (Shore A) à 55° (Shore D), une élasticité de rebondissement de 5 à 40 %, et une dimension moyenne de particule de 150 à 500 µm, caractérisé en ce que le diamètre moyen de particule du chloropolyéthylène ne s'écarte pas de plus de 15 % de celui du polyéthylène de départ.

2. Chloropolyéthylène selon la revendication 1, caractérisé en ce que le diamètre moyen de particule du chloropolyéthylène ne s'écarte pas de celui du polyéthylène de départ de plus de 4-12 %.

3. Chloropolyéthylène selon la revendication 1 et/ou 2, caractérisé en ce que le diamètre moyen de particule est de 150 à 300 µm.

4. Procédé de préparation de chloropolyéthylène selon au moins l'une des revendications 1 à 3, par chloration de polyéthylène en phase aqueuse et en présence d'un agent dispersant, caractérisé en ce que l'on utilise comme agent dispersant la combinaison de poly-N-vinylpyrrolidone et d'acide silicique hydrophobe.

5. Procédé selon la revendication 4, caractérisé en ce que la poly-N-vinylpyrrolidone présente un poids moléculaire moyen (moyenne de viscosité) de 10 000 à 100 000.

6. Procédé selon l'une des revendications 4 et 5, caractérisé en ce que l'on introduit dans le bain de chloration la poly-N-vinylpyrrolidone en quantité de 0,02 à 1 % en poids, par rapport au polyéthylène.

7. Procédé selon au moins l'une des revendications 4 à 6, caractérisé en ce que l'on introduit l'acide silicique hydrophobe en quantité de 0,1 à 1 % en poids par rapport au polyéthylène.

8. Procédé selon au moins l'une des revendications 4 à 7, caractérisé en ce que le rapport en poids de la poly-N-vinylpyrrolidone à l'acide silicique hydrophobe est compris entre 1 : 10 et 5 : 1.

9. Utilisation du chloropolyéthylène selon au moins l'une des revendications 1 à 3 pour la préparation de mélanges qui, outre des polymères ainsi qu'éventuellement des stabilisants et d'autres additifs connus, contiennent ce chloropolyéthylène.

10. Objets moulés fabriqués à partir du chloropolyéthylène selon au moins l'une des revendications 1 à 3.